Europäisches Patentamt

European Patent Office

Office européen des brevets

(11) Veröffentlichungsnummer: **0 259 594 B1**

# EUROPÄISCHE PATENTSCHRIFT

(45) Veröffentlichungstag der Patentschrift: 02.10.91

(51) Int. Cl.5: **B01D 29/07**, B01D 35/14, B01D 27/08, B01D 27/10

(21) Anmeldenummer: 87111032.6

(22) Anmeldetag: 30.07.87

(54) **Ringförmiger Filtereinsatz.**

(30) Priorität: 08.09.86 DE 3630504

(43) Veröffentlichungstag der Anmeldung:
16.03.88 Patentblatt 88/11

(45) Bekanntmachung des Hinweises auf die
Patenterteilung:
02.10.91 Patentblatt 91/40

(84) Benannte Vertragsstaaten:
DE ES FR GB IT

(56) Entgegenhaltungen:
DE-C- 3 514 778
FR-A- 2 191 613
FR-A- 2 465 507
US-A- 3 592 766
US-A- 3 822 787

(73) Patentinhaber: KNECHT Filterwerke GmbH
Haldenstrasse 48
W-7000 Stuttgart 50(DE)

(72) Erfinder: Widmann, Sigbert
Schillerstrasse 27
W-7322 Donzdorf(DE)

(74) Vertreter: Pfusch, Volker, Dipl.-Ing. et al
MAHLE GMBH Patentabteilung Pragstrasse
26-46 Postfach 50 07 69
W-7000 Stuttgart 50(DE)

EP 0 259 594 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen ringförmigen Filtereinsatz nach dem Oberbegriff des Patentanspruchs 1.

Bei derartigen Filtereinsätzen, wie sie beispielsweise aus FR-A-2.191.613 bekannt sind, werden bisher die Einzelteile, aus denen der Einsatz besteht, nämlich das ringförmig angeordnete Filtermaterial, die beiden Endscheiben, in die ggf. Ventile integriert sind, und der mittlere rohrförmige Stützkörper erst bei der Montage des Filtereinsatzes miteinander verbunden. Die Verbindung erfolgt dabei im Wesentlichen allein durch Verkleben des Filtermaterials an dessen Stirnseiten mit den Endscheiben, wodurch gleichzeitig das Stützrohr in dem Filtereinsatz fixiert wird.

Der Stützkörper selbst ist in der Regel ein gelochtes, Blechrohr mit Längsnaht. Derartige Rohre, die aus zusammengerolltem ursprünglich ebenen Blechmaterial hergestellt sind, weisen in der Regel keinen exakt kreisrunden Umfang auf und neigen daher bei dünnen Wanddicken unter radialem Druck zum Kollabieren. Dem kann zwar durch größere Wanddicken abgeholfen werden, was aber wiederum unnötig hohen Materialaufwand bedeutet. Die Steifigkeit gegen Kollabieren kann auch durch umlaufende Sicken erhöht werden, was jedoch wiederum durch die Längsverbindung des Stützrohres fertigungsmäßig erschwert wird.

Außerdem existieren bei der Fertigmontage des Filtereinsatzes relativ viele lose Einzelteile, die miteinander verbunden werden müssen. Dies verursacht einen relativ hohen Fertigungsaufwand und vermindert die Maßhaltigkeit.

Von diesem Stand der Technik ausgehend liegt der Erfindung die Aufgabe zugrunde, einen Filtereinsatz zu schaffen, der einfacher und damit wirtschaftlicher herstellbar ist und bei dem der Einsatz an metallischen Materialien verringert werden kann.

Gelöst wird diese Aufgabe durch eine Ausführung des gattungsgemäßen Filtereinsatzes nach den Merkmalen des kennzeichnenden Teils des Anspruchs 1.

Zweckmäßige Ausgestaltungen dieses Gegenstandes enthalten die Unteransprüche.

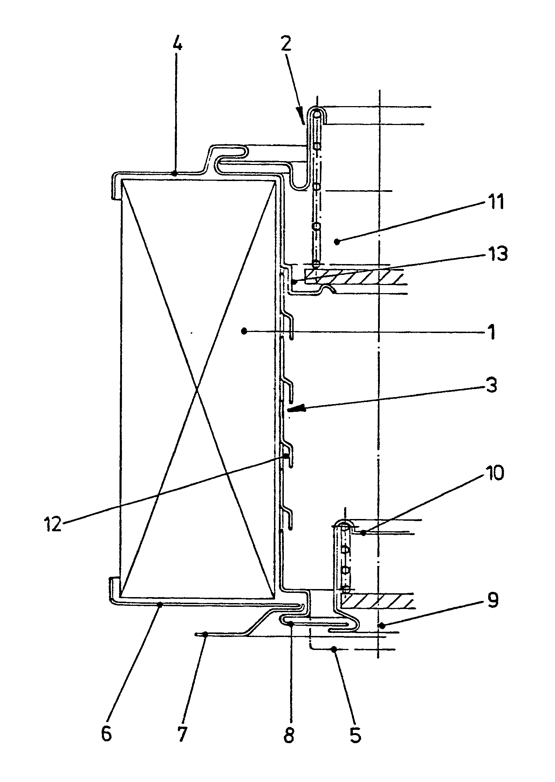

Ein Ausführungsbeispiel ist in der Zeichnung dargestellt, die einen derartigen Filtereinsatz in einem Längsschnitt zeigt, wobei allerdings nur eine Hälfte des Filtereinsatzes tatsächlich gezeichnet ist.

Ein ringförmig gefaltetes Filtermaterial 1 aus Papier, ein sogenannter Papierstern, ist radial innen durch einen aus einem ersten Teil 2 und einem zweiten Teil 3 bestehenden Stützkörper gestützt. Das erste Teil 2 des Stützkörpers ist ein tiefgezogenes Blechteil, in das die das Filtermaterial sternförmig abdeckende Endscheibe 4 intergriert ist.

Das zweite Teil 3 des Stützkörpers ist ebenfalls ein Blech-Tiefziehteil. Die Form des Bodens dieses Tiefzeihteiles, wie sie beim Tiefziehen zunächst erzeugt wird, ist durch die strichpunktierte Linie 5 angedeutet. Die strichpunktierte Linie 5 umreißt ein domförmig aus dem Boden des zweiten Teils 3 des Stützkörpers herausragendes Topfteil. Über dieses werden die zugehörige Endscheibe 6 sowie eine Stützfeder 7 übergestülpt. Sodann wird aus dem domförmigen Bodenteil eine Bördel-Blechfalte 8 durch Pressen erzeugt und so an die Endscheibe und Stützfeder angepreßt, daß diese beiden Teile form- und kraftschlüssig an dem zweiten Teil 3 des Stützkörpers fixiert sind.

In den Boden des zweiten Teils 3 des Stützkörpers ist eine zentrale Öffnung 9 eingestanzt, in die ein übliches Bypassventil 10 einsetzbar ist.

In das erste Teil 2 des Stützkörpers kann ein übliches Rückschlagventil 11 fest integriert eingebaut sein.

Bei der Verwendung eines Paperfiltersternes als Filtermaterial 1 genügt es, wenn ausschließlich in dem zweiten Teil 3 des Stützkörpers radial nach innen führende Öffnungen 12 vorgesehen sind. In dem Ausführungsbeispiel sind diese Öffnungen als kiemenartige Eindrückungen des Stützmantelmaterials ausgebildet. Bei der Erzeugung derartiger Öffnungen fällt kein Abfallmaterial an, da das Blechmaterial nur nach radial innen eingedrückt wird.

Das erste Teil 2 des Stützkörpers weist einen eingezogenen Bund 13 auf, über den das zweite Teil 3 des Stützkörpers greift. Der Bund 13 ist radial genau um dasjenige Maß zurückgesetzt, das der Dicke der Wand des zweiten Teils 3 des Stützkörpers entspricht. Dadurch ist eine durchgehende zylindrische Außenfläche der Teile 2 und 3 des Stützkörpers gewährleistet. Außerdem gewährleistet der Bund 13 durch seine Form eine hervorragende radiale Steifigkeit, die automatisch auch für das auf den Bund 13 übergreifende Ende zweiten Teils 3 des Stützkörpers gilt. Da durch die topfförmige und gebördelte Ausführung des Bodens des zweiten Teils 3 des Stützkörpers dieser an beiden Enden steif gegen radiale Belastung ausgebildet ist, läßt sich bereits mit äußerst dünnen Wanddicken für den Stützkörper bei gleichzeitig hoher radialer Steifigkeit auskommen. Dies ist ein wesentlicher Vorteil der erfindungsgemäßen Ausbildung.

Das Filtermaterial 1 ist an seinen Stirnseiten mit den Endscheiben 4 und 6 verklebt, wobei die Enscheibe 4 in das erste Teil 2 des Stützkörpers integriert ist.

## Patentansprüche

1. Ringförmiger Filtereinsatz bestehend aus einem Filtermaterial (1) in Ringform, insbesondere sternförmig gefaltetem Filterpapier, einem das Filtermaterial nach radial innen stützenden, zumindest in über den größten Teil der Länge verteilten Bereichen radial flüssigkeitsdurchlässigen, rohrförmigen metallischen Stützkörper, die Stirnseiten des Filtermaterials klebend abdeckenden Endscheiben (4,6) und einem in eine der Endscheiben integrierten Rückschlagventil (11),

**gekennzeichnet** durch die Merkmale:

a) das in die eine Endscheibe (4) integrierte Gehäuse des Rückschlagventils (11) bildet ein erstes Teil (2) des rohrförmigen Stützkörpers,

b) das zweite Teil (3) des Stüzkörpers ist ein topfförmiges tiefgezogenes Blechteil,

c) das tiefgezogene Blechteil weist an seinem Boden einen radial nach innen eingezogenen Bereich auf,

d) an das radial äußere Ende des radial nach innen eingezogenen Bereiches ist nach radial außen eine Blechfalte (8) angeformt, die zumindest die in diesem Endes des Stüzkörpers zugeordnete in dem radial eingezogenen Bereich aufliegende Endscheibe (6) Form- und kraftschlüssig Fixiert,

e) das Gehäuse des Rückschlagventils (11) weist an seinem der gegenüber liegenden Endscheibe (6) zugewandten Ende einen eingezogenen Ringbund (13) auf, dessen Außenradius um das Maß der Dicke der Außenwand des zweiten Stützkörperteiles (3) gegenüber dem Außendurchmesser des übrigen das Filtermaterial (1) radial abstützenden Oberflächenbereiches zurückgesetzt ist, wobei das zweite Teil (3) des Stützkörpers das erste Teil (2) in diesem Bereich umgreift.

2. Ringförmiger Filtereinsatz nach Anspruch 1,
**dadurch gekennzeichnet**
daß die Blechfalte (8) einen nach radial innen gerichteten über den radial eingezogenen Bereich frei hineinragenden Schenkel aufweist.

3. Ringförmiger Filtereinsatz nach einem der vorhergehenden Ansprüche,
**dadurch gekennzeichnet,**
daß die gebördelte Blechfalte (8) des zweiten Teils (3) des Stüzkörpers außer der Endscheibe (6) noch eine Stützfeder (7) für die Lagerung des Filtereinsatzes, form- und kraftschlüssig fixiert.

4. Ringförmiger Filtereinsatz nach einem der vorhergehenden Ansprüche,
**dadurch gekennzeichnet,**
daß in dem rohrförmigen Bereich des zweiten Teils (3) des Stützkörpers Öffnungen (12) eingeprägt sind.

5. Ringförmiger Filtereinsatz nach einem der vorhergehenden Ansprüche,
**dadurch gekennzeichnet,**
daß das den ersten Teil (2) des Stützkörpers bildende Gehäusemindestens 20% , insbesondere mindestens 25%, der Gesamtstützkörperlänge beträgt.

## Claims

1. An annular filter insert consisting of a filter material (1) of annular shape, particularly filter paper folded in a stellate pattern, a tubular metal supporting member which is radially permeable to fluid at least in areas distributed over the major part of its length and which radially inwardly supports the filter material and having adhesively covering the ends of the filter material end discs (4, 6) and a non-return valve (11) which is integrated into one of the end discs, characterised by the features:

a) the housing of the non-return valve (11) integrated into one end disc (4) forms a first part (2) of the tubular supporting body,

b) the second part (3) of the supporting body is a pot-shaped deep-drawn sheet metal part,

c) the deep-drawn sheet metal part has at its bottom a radially inwardly reduced zone,

d) formed radially outwardly onto the radially outer end of the radially inwardly reduced zone is a fold (8) in the sheet metal the said fold positively and operatively securing at least the end disc (6) which is associated with this end of the supporting body and which rests in the radially reduced zone,

e) the housing of the non-return valve (11) has at its end which faces the oppositely disposed end disc (6) a reduced annular shoulder (13), the outer radius of which is set back by the thickness of the outer wall of the second part (3) of the supporting body in relation to the outside diameter of the rest of the surface which radially supports the filter material (1), the second part (3) of the supporting body engaging around the first part (2) in this zone.

2. An annular filter insert according to Claim 1, characterised in that the sheet metal fold (8) has a radially inwardly directly arm which projects freely over the radially reduced zone.

3. An annular filter insert according to one of the preceding Claims, characterised in that the rolled over sheet metal fold (8) in the second part (3) of the supporting body positively and operatively fixes not only the end disc (6) but also a supporting spring (7) for mounting of the filter insert.

4. An annular filter insert according to one of the preceding Claims, characterised in that apertures (12) are stamped into the tubular zone of the second part (3) of the supporting body.

5. An annular filter insert according to one of the preceding Claims, characterised in that the housing which forms the first part (2) of the supporting body represents at least 20% and in particular at least 25% of the total length of the supporting body.

**Revendications**

1. Cartouche filtrante annulaire composée d'une matière filtrante (1) de forme annulaire, en particulier en papier filtrant plié en étoile, un corps de support tubulaire métallique assurant le maintien radialement vers l'intérieur de la matière filtrante et laissant passer le liquide dans le sens radial au moins dans des régions réparties sur la majeure partie de la longueur, des flasques terminaux (4, 6) recouvrant par collage les faces frontales de la matière filtrante. et d'un clapet antiretour (11) intégré dans l'un des flasques terminaux, **caractérisée en ce** que

    a) la boite du clapet antiretour (11) intégrée dans l'un des flasques terminaux (4) constitue un premier élément (2) du corps de support tubulaire,

    b) le second élément (3) du corps de support est une pièce de tôle emboutie en forme de pot,

    c) la pièce de tôle emboutie présente sur son fond une zone radialement en retrait vers l'intérieur,

    d) sur l'extrémité radialement extérieure de la zone radialement en retrait vers l'intérieur est conformé radialement vers l'extérieur un pli de tôle (8) qui fixe à engagement positif et par adhérence au moins le flasque terminal (6) associé à cette extrémité du corps de support et reposant dans la zone radialement en retrait,

    e) la boîte du clapet antiretour (11) présente à son extrémité dirigée vers le flasque terminal (6) opposé un collet annulaire (13) dont le rayon extérieur est ramené en arrière de la valeur de l'épaisseur de la face extérieure du second élément (3) du corps de support par rapport au diamètre du reste de la surface assurant le soutien radial de la matière filtrante (1), le second élément (3) du corps de support enveloppant le premier élément (2) dans cette région.

2. Cartouche filtrante annulaire selon la revendication 1, caractérisée en ce que le pli de tôle (8) présente une branche dirigée radialement vers l'intérieur et dépassant librement au-delà de la zone radialement en retrait.

3. Cartouche filtrante annulaire selon l'une des revendications précédentes, caractérisée en ce que le pli de tôle bordé (8) du second élément (3) du corps de support assure encore la fixation à engagement positif et par adhérence d'un ressort de support (7) pour le montage de la cartouche filtrante, en plus de celle du flasque terminal (6).

4. Cartouche filtrante annulaire selon l'une des revendications précédentes, caractérisée en ce que dans la zone tubulaire du second élément (3) du corps de support sont imprimées des ouvertures (12).

5. Cartouche filtrante annulaire selon l'une des revendications précédentes, caractérisé en ce que le boîtier formant le premier élément (2) du corps de support s'étend sur au moins 20 %, et notamment sur 25 %, de la longueur totale du corps de support.

EP 0 259 594 B1

5